Europäisches Patentamt

European Patent Office

Office européen des brevets

(11) Publication number: **0 328 154**

**A1**

(12) **EUROPEAN PATENT APPLICATION**

(21) Application number: **89102444.0**

(22) Date of filing: **13.02.89**

(51) Int. Cl.⁴: **B29B 7/40**

(30) Priority: **12.02.88 JP 31624/88**

(43) Date of publication of application:
**16.08.89 Bulletin 89/33**

(84) Designated Contracting States:
**BE DE FR GB IT**

(71) Applicant: **KANEGAFUCHI KAGAKU KOGYO KABUSHIKI KAISHA**
**2-4 Nakanoshima 3-chome**
**Kita-ku Osaka-shi Osaka 530(JP)**

(72) Inventor: **Hisanaga, Akinori**
**6-39, 2-chome, Nishihata**
**Takasago-shi Hyogo-ken(JP)**
Inventor: **Sakubata, Takashi**
**967-4, Sakamoto-honcho**
**Ohtsu-shi Shiga-ken(JP)**
Inventor: **Yoshioka, Tetsuo**
**1-2-126, Hieitsuji 2-chome**
**Ohtsu-shi Shiga-ken(JP)**

(74) Representative: **Vossius & Partner**
**Siebertstrasse 4 P.O. Box 86-07 67**
**D-8000 München 86(DE)**

(54) **Stirring-type mixer.**

(57) The present invention discloses a stirring-type mixer comprising a cylindrical container (10), a rotor (22) housed in the cylindrical container and stirring blades (18,24) attached to either of the cylindrical container or the rotor or the both, for stirring and mixing a plurality of fluid materials of different kinds fed into the aforementioned cylindrical container, while said cylindrical container and the rotor are rotated relatively, wherein a cooling means (32,36) is provided inside the aforementioned rotor and fluid materials are cooled thereby in the cylindrical container. The mixer has the capability of releasing the heat of reaction and Joule's heat out thereof and ensures against thermal deformation of the liquid material as well as shortening of its pot life.

FIG. 1

## STIRRING-TYPE MIXER

The present invention relates to a stirring-type mixer for mixing a plurality of liquid materials such as liquefied synthetic resins, solvents, curing agents et cetera by means of stirring blades, in particular to a cooling mechanism for such stirring-type mixer.

As materials for moldings such as synthetic resin films and synthetic resin sheets, synthetic resins of reactive curing type are often used, and as reactive curing-type synthetic resins there are exemplified epoxy resin, urethane resin, phenol resin, polyimide resin, unsaturated polyester resin and the like.

Such reactive curing type synthetic resins are of the type which, when two liquid components such as a synthetic resin and a curing agent are mixed together, starts increasing in viscosity (starts curing) as the reaction proceeds slowly until it is no longer moldable. The time for a two-liquid type reactive synthetic resin to become unmoldable is called pot life, and this pot life depends on the temperature and the ratio of the two component liquid to be mixed together. A longer pot life is advantageous in workability but if for its purpose the portion of the curing agent to be mixed is reduced, it possible causes deterioration of the properties of the molded article or complicates the aftertreating step of the molding process. For making the pot life as long as possible with simultaneous optimum adjustment of the synthetic resin-to-curing agent mixing ratio, it has been a usual practice to cool the mixing vessel of the mixer from outside.

The Joule's heat resulting from stirring of the synthetic resin and the curing agent in the vessel with stirring blades and the heat of reaction resulting from mixing thereof tend to be retained inside the vessel, this resulting in quicker curing of the synthetic resin in the vicinity of the rotor than elsewhere. Presence of a cured masses in an uncured resinous mixture is bound to result in formation of foreign objects when it is molded or in deterioration of the properties of the molded article, hence it was necessary to uniformize the progress of curing of the mixed resin solution before molding.

When the resin locally cured has come into contact locally with either the mixing vessel or the rotor, it gives rise to a phenomenon that with it as the core a resinous mass of advanced curing is caused to grow continuously. Hence, in the past, it was necessary to ensure against exposure of the mixed solution in the mixing vessel even locally or for a short time to an elevated temperature in the high temperature range.

Further, it was a usual practice to cool under stirring a mixture of two liquids up to several 1,000 poises as it is fed continuously to a molding machine and continue cooling the mixture even in the molding machine, but uniform cooling was difficult to attain due to poor thermal transfer efficiency. It was, therefore, desired to have a mixing device good for efficient, continuous and uniform cooling of a mixture of two liquids high in viscosity.

Thus, with a reactive curing resin, for example, explanation has been made of the problems faced but, also when a plurality of synthetic resins were mixed, efficient cooling of the fluid mixture was necessary since the synthetic resin mixture had its properties subject to influence by the heat of reaction or Joule's heat.

It is a primary object of the present invention to provide a stirring-type mixture free from the aforementioned defects.

Further objects and advantages of the present invention will be apparent from those skilled in the art from reading of the detailed description below.

The present inventors have, after their extensive and intensive researches, discovered that the above objects are attainable by providing a cooling means inside the rotor and cooling given fluid materials thereby and have now completed this invention.

The invention is described in detail in connection with the drawings in which

Fig. 1 is a front elevation of the essential parts of a stirring-type mixer of the present invention.

Fig. 2 is a horizontal sectional view in Fig. 1.

Figs. 3 and 4 are sectional views of essential parts of the rotor of the mixers alone, to which other embodiments of the present invention are applied.

Figs. 5, 6 and 7 and 8 are front elevations of the essential parts of stirring-type mixers to which further embodiments of the present invention are applied.

A stirring-type mixer of the present invention comprises a cylindrical container, a rotor provided in the cylindrical container and stirring blades attached to either or both of the cylindrical container and the rotor and stirring and mixing a plurality of fluid materials of different kinds fed into the aforementioned cylindrical container with it and the rotor being rotated relatively, wherein a cooling means is provided inside the aforementioned rotor and fluid materials are cooled thereby in the cylindrical container.

When the mixer of the present invention is used, a plurality of fluid materials of different kinds are stirred and mixed by the stirring blades and the heat of reaction and Joule's heat are efficiently transferred to the rotor positioned to be covered with such fluid materials and are subsequently released out of the mixer by the cooling means. The fluid materials are then cooled thereby and thermal deformation of the fluid material or heat-induced shortening of the pot life can be avoided.

Also, by having the cylindrical container, rotor et cetera sufficiently cooled before letting the fluid materials through the mixer, contact of the fluid material with metal surface of the normal temperature inside the mixer at the time of starting feeding of fluid materials can be avoided. According to the mixer of the present invention, the rotor et cetera can be cooled in advance to ensure against contact of the fluid materials with the rotor surface or the like at the normal temperature immediately after starting feeding of the fluid material and consequent local progress of curing therearound.

Now detailed explanation is made about a preferred embodiment of the present invention with reference being made to the accompanying drawings.

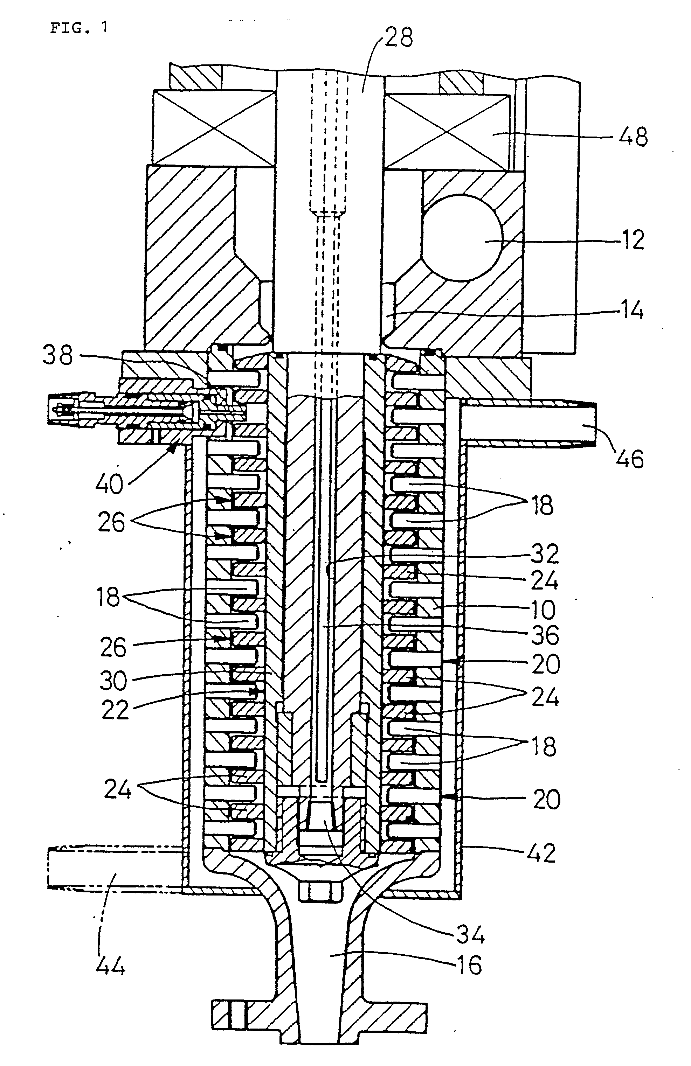

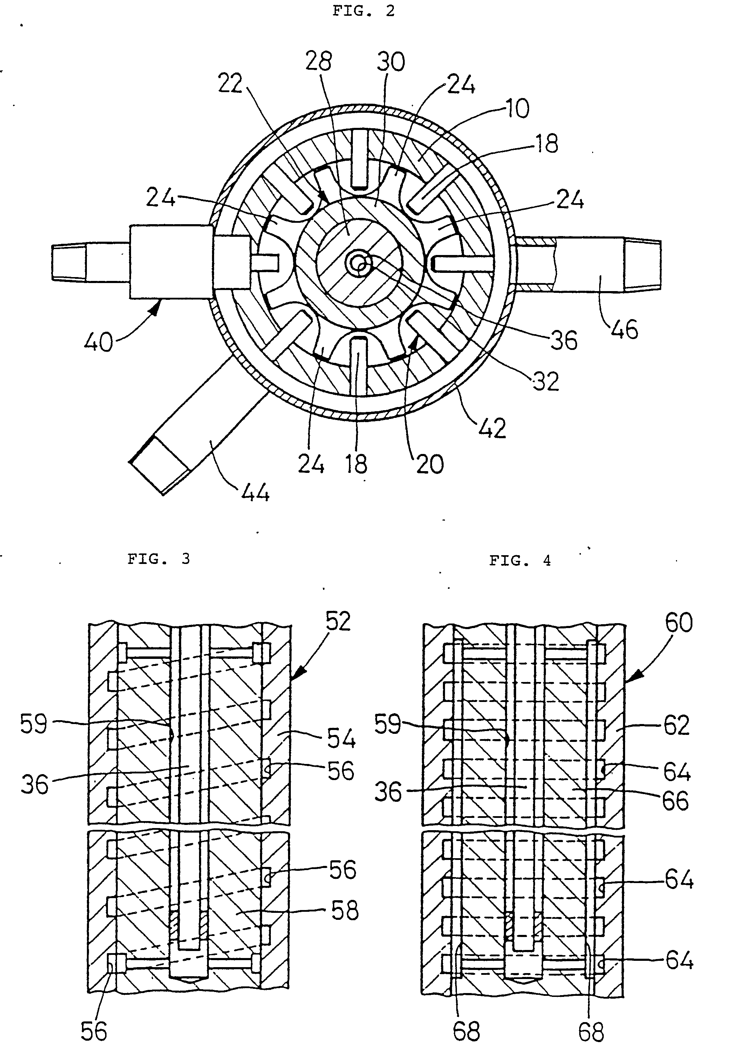

Referring to Figs. 1 and 2, numeral 10 designates a cylindrical container of a stirring-type mixer for continuously stirring and mixing two liquids, at one end of the cylindrical container 10 there is provided a fluid inlet 14 through which a fluid synthetic resin pumped through a feeding channel 12 and at the other end thereof there is provided a nozzle-shaped fluid outlet 16. On the inside of the cylindrical container 10 there are provided a plurality of column-shaped stationary stirring blades 18 projecting substantially radically inward on a given peripheral line at substantially the same intervals and, with these as a row 20 of stationary stirring blades 18, a plurality thereof are provided between both ends of the cylindrical container.

The cylindrical container 10 has housed therein a rotor 22 which rotates about an axis in agreement with the axis of the cylindrical container 10, and this rotor 22 is driven to rotate by a driving gear (not shown). On the outside of the rotor 22 a plurality of dynamic stirring blades 24 are provided projecting substantially radially outward on a given peripheral line at substantially the same intervals and, with these as a row 26 of dynamic stirring blades 24, a plurality thereof are arranged to be in alternating relationship with the rows 20 of stationary stirring blades provided on the inside of the cylindrical container 10. The dynamic stirring blade 24 is made, for instance, by cutting a disk in a proper configuration and then fixing it on the outer periphery of the rotor 22 by pressing, shrink fitting or the like and a small one can possibly be made by machining a properly-sized metal block. Hence, the rows 26 of dynamic stirring blades rotates between adjacent rows 20 of stationary stirring blades as the rotor 22 is driven to rotate.

The rotor 22 is composed of a shaft 28 for transmitting power from a driving gear (not shown) and a sleeve 30 set on the outer periphery thereof, and the dynamic stirring blades 24 (rows 26 of dynamic stirring blades 24) are fixedly set on the outer peripheral face of the sleeve 30. The shaft 28 of the rotor 22 has formed therein a through-hole 32 along its axis and this through-hole 32 is closed at one end with a plug 34. The through-hole 32 has a pipe 36 inserted thereinto through the other end thereof, and the refrigerant fed through this pipe 36 flows through the gap between the pipe 36 and the through-hole 32 to the other end of the through-hole 32, cooling the fluid mixture in contact with the peripheral wall of the rotor 22, and from that end the refrigerant is let to flow to and through a heat exchanger and, cooled thereby, is fed back to the pipe 36 and then into the through-hole 32 therethrough. The path for the refrigerant such as the pipe 36 is connected by a known means with a heat-exchanger or the like outside the mixer.

One of the stationary stirring blades 18 disposed on the inlet 14 side of the cylindrical container 10 has formed therein an inlet 38 opening substantially radially inward so that the fluid mixture is let in toward the center of the cylindrical container 10, that is, the rotor 22. As the fluid material to be let in through the inlet 38 is chosen the curing agent or the one smaller in volume of the two liquids to be mixed. The other end opposite to the inlet 38 is connected with a pump (not shown) through a check valve 40 lest it should flow back into the cylindrical container 10 due to the pressure therein.

The cylindrical container 10 is encased in an outer shell 42 and the refrigerant fed through an inlet 44 provided at one end of the outer shell 42 flows through between the outer shell 42 and the cylindrical container 10 to the other end of the outer shell 42, cooling the fluid materials inside, and through a return aperture 46 the refrigerant is led to a heat-exchanger (not shown) to be cooled there before it is returned to the interior of the outer shell 42 through the inlet 44. Thus, in this embodiment the temperature of the fluid material inside the cylindrical container 10 is kept substantially constant, also by the aforementioned additional cooling means provided inside the rotor 22.

As refrigerant is used a gaseous or liquid fluid such as $NH_3$, $CO_2$, $CF_2Cl_2$, $CH_3Cl$, $C_2H_5Cl$ or the like. It is desirous that the refrigerant used for the cooling means inside the rotor 22 and that fed to the outer shell 42 are the same but it is possible, as necessary, to use as refrigerant a liquefied gas for the cooling means inside the rotor 22.

Numeral 48 designates a mechanical seal used to ensure against leakage of the fluid synthetic resin through between the cylindrical container 10 and the shaft 28 of the rotor 22.

With a stirring-type mixer of the composition described above, first the refrigerant is fed to the pipe 36 disposed inside the rotor 22 and the inlet 44 provided in the outer shell 42, and the rotor 22 and cylindrical container 10 and also the dynamic stirring blades 24 and stationary stirring blades 18 are cooled. After the mixer has been cooled, the fluid synthetic resin is pumped thereinto through the feeding channel 12. The fluid synthetic resin pumped through the feeding channel 12 is fed into the cylindrical container 10 through the fluid inlet 14 and is caused to flow toward the fluid outlet 16 by the pressure of the fluid synthetic resin pumped thereinto continuously. Meanwhile, when, for instance, the curing agent is fed in through the inlet 38 and the fluid synthetic resin and the curing agent are stirred and mixed by the stationary stirring blades 18 and the dynamic stirring blades 24 being driven to rotate.

As the synthetic resin and the curing agent are stirred and mixed, the heat of reaction is generated through reaction of the synthetic resin with the curing agent, and also Joule's heat resulting from shearing and stirring a synthetic resin having several 1,000 poises in viscosity or a synthetic resin mixed with a curing agent with the stirring blades 18 and 24, and the temperature of the resinous mixture is raised. With the mixer of this embodiment, however, the resinous mixture is not only cooled from outside the cylindrical container 10 but also by the cooling means provided inside the rotor 22, which is in contact with the resinous mixture surrounding it, with a high efficiency.

A particular feature of this device, however, is that the area of contact with the resinous mixture is increased by provision of a large number of the dynamic stirring blades 24, this contributing to improvement of the efficiency of heat transfer to the cooling means inside the rotor 22. Also, while the cooling system using the refrigerant fed into the outer shell 42 set outside the cylindrical container 10 has a large portion of its capacity spent for preventing heat transfer from outside, the ambient temperature being usually much higher, the cooling means inside the rotor 22 is quite effective for cooling the resinous mixture.

The resinous mixture cooled uniformly to a predetermined temperature by the cooling means provided inside the mixture is safe from local progress of curing due to expiration of its pot life and homogeneous synthetic resin articles molded under a given pot-life condition can be provided.

Described above in detail is a preferred embodiment of the present invention but, needless to say, the invention is not limited thereto or thereby, and other embodiments are possible and conceivable.

For instance, as seen from Fig. 3 showing the rotor of a stirring-type mixer, the path for refrigerant may as well be formed between the inner wall of a sleeve 54 of a rotor 52 and the outer wall of a shaft 58 by cutting a spiral groove 56 in the inner wall of a sleeve 54. In this embodiment the refrigerant fed through one end of the groove 56 from the pipe 36 inserted in a hole 59 made in a shaft 58 flows through the groove 56 cooling the fluid resinous mixture in contact with the external surface of the rotor 52 and is let out of the mixer from the other end of the groove 56 through the gap between the hole 59 and the pipe 36. By thus constituting the cooling means it is possible to increase the heat transfer area on the refrigerant side, this enabling increase of the cooling capacity as well as cooling efficiency.

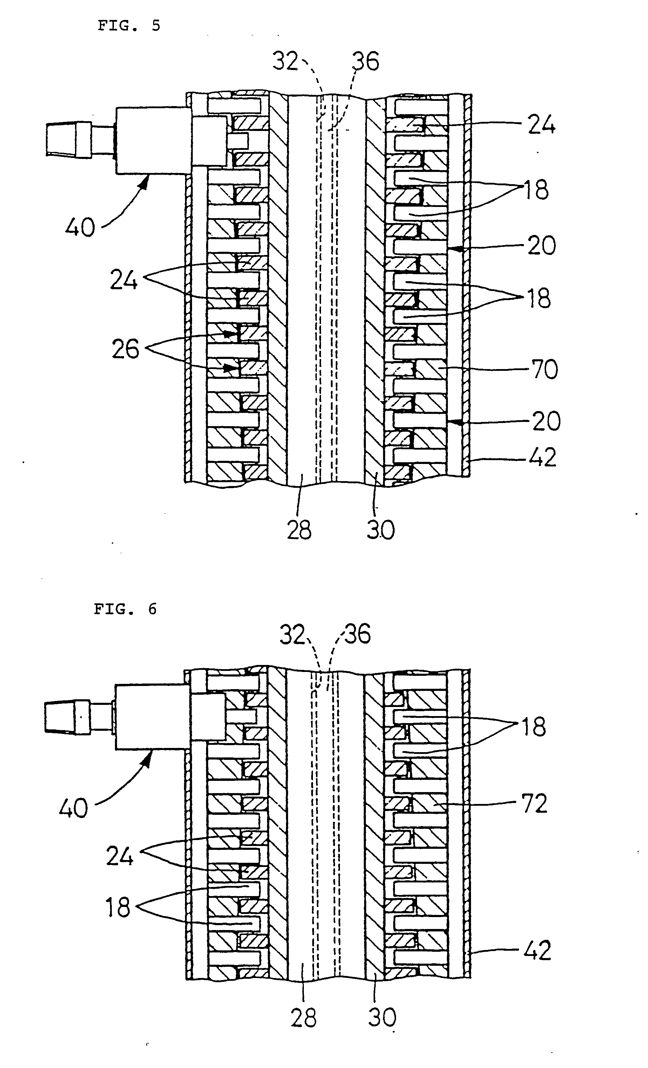

Then, another cooling means is explained referring to Fig. 4 showing the rotor alone as in Fig. 3. In the figure a plurality of annular grooves 64 are cut in the inner wall of a sleeve 62 of a rotor 60 and one or more axial grooves 68 are cut in the outer wall of a shaft 66 to constitute a path for refrigerant. In this embodiment the refrigerant fed into the grooves 68 from the pipe 36 flows through the grooves and continue flowing, filling the annular grooves 64, and the resinous mixture is then cooled.

In the above-mentioned embodiments, the spiral groove 56 or the annular grooves 64 may as well be cut in the outer wall of the shaft 58 or 66, respectively. It is also possible to provide a lot of axial grooves on the outer wall of the shaft or the inner wall of the sleeve, then to cool the resinous mixture by letting the refrigerant pass through the grooves, without using spiral or annular grooves.

Thus, explanation has been made of examples of cooling means provided in the rotor using liquid or gaseous refrigerants but it is also possible to use an electrical cooling means such as a heat pump.

Furthermore, stirring-type mixers of the present invention are not limited to the above embodiments and, for example, the inlet for curing agent et cetera may as well be provided in the dynamic stirring blade or cylindrical container and the invention is also well applicable to mixers of the type having a plurality of inlets for mixing of one or more fluid material/s.

As shown in Fig. 5, the inner diameter of a cylindrical container 70 may be made smaller axially toward the outlet so as to make the cross-sectional area of the path for the fluid material gradually smaller and the flowing velocity of the fluid material progressively higher and, although individual illustrations are omitted, it is as well possible to increase the outer diameter of the rotor's sleeve progressively or stepwise or gradually decrease the clearance between the cylindrical container with the stationary stirring blades and the rotor with the dynamic stirring blades to make the flow path's cross-sectional area smaller progressively or stepwise. Thus, even with a mixer of the type for stirring and mixing and quickly feeding the mixed solution to a molding machine thereafter, it is well possible to cool the mixed solution by the use of the cooling means inside the rotor.

Further, as shown in Fig. 6, in reversal of the above examples, it is also possible to make the inner diameter of a cylindrical container 72 progressively large for the cross-sectional area of the fluid material's flow path to increase progressively and likely, although not illustrated, to decrease the outer diameter of the rotor's sleeve smaller progressively or stepwise or increase the cross-sectional area of the clearance between the cylindrical container with stationary stirring blades and the rotor with the dynamic stirring blades gradually larger for the flow path's cross-sectional area to be larger progressively or stepwise. Thus, a further raise of the cooling effect is attainable with a device so constituted that the flowing velocity is decreased, or that the shearing force acting on the fluid material is reduced.

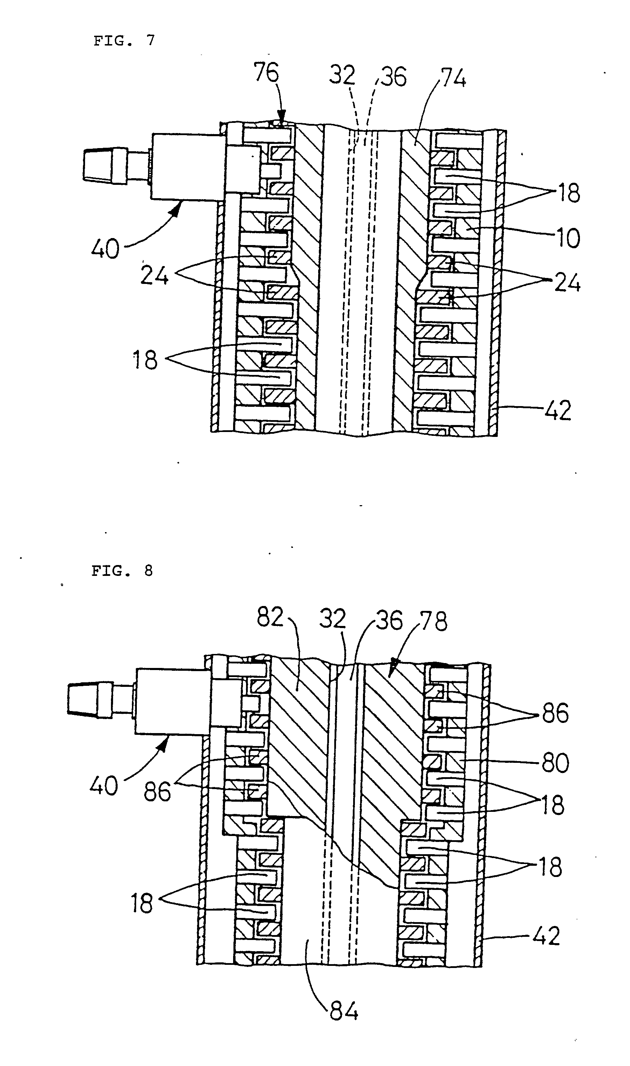

As shown in Fig. 7, the present invention is well applicable to a type of mixer with which the outer diameter of a rotor 74 is made larger in a given portion of its length to make the flow path's cross-sectional area smaller so that the fluid material is mixed being rapidly sheared with a larger shearing force in the constricted portion 76 and the mixed solution is caused to be assimilated in the following portion with the flow path's cross-sectional area increased. In this embodiment the mixed solution raised in temperature by rapid stirring and mixing is efficiently cooled in the following widened portion.

Further, as shown in Fig. 8, the present invention is well applicable to a mixer with which an increased-diameter portion 82 and a decreased-diameter portion 84 are provided in a rotor 78 and a cylindrical container 80. In this type of mixer, it is possible to raise the peripheral speed of the dynamic stirring blade 86 in the increased-diameter portion 82, and after stirring and mixing the fluid material, it is possible to cool the mixed solution under stirring in the decreased-diameter portion 84 low in peripheral speed.

Further, the stirring blades are not necessarily of radially projecting structure and, for instance, it may as well be of a spiral form, and the stirring blades are not necessarily be provided on both cylindrical container and rotor and it may possibly be provided on either. Also, in the above embodiment, the present invention is applicable to the stirring-type mixer with the rotor side fixed and the cylindrical container side movable, the container need not be cylindrical but also polygonal, and this invention is applicable to any stirring type of mixer comprising a cylindrical container, a rotor and stirring blades and capable of relatively rotating the cylindrical container and the rotor for stirring and mixing the fluid material, and these are all included in the scope of the present invention. Besides, according to the present invention, it is not necessarily the essential requirement that a cooling means be disposed outside the cylindrical container, the aforementioned embodiments can be combined as necessary and so on, and the invention can be embodied in modified, improved or revised forms within the scope of the invention on the basis of knowledges of those skilled in the art.

Since the mixer of this invention has a cooling means provided inside its rotor, this effecting cooling of a fluid material, the fluid material is cooled efficiently. Also, the invented mixer can be cooled in advance from inside by the cooling means inside the rotor, so that the normal temperature condition, which causes shortening of the pot life, at the time of starting the feeding of the fluid material can be avoided without fail.

The invented mixer enables avoidance of the condition in which cured masses of a synthetic resin are present in an uncured synthetic resin as a result of local progress of curing, and thus has an outstanding feature capable of manufacture of various synthetic resin molded articles superior in quality.

## Claims

1. A stirring-type mixer comprising a cylindrical container, a rotor housed in the cylindrical container and stirring blades attached to either the cylindrical container or the rotor or the both, for stirring and mixing a plurality of fluid materials of different kinds fed into said cylindrical container, while said cylindrical container and said rotor are rotated relatively, wherein a cooling means is provided inside said rotor and fluid materials are cooled thereby in said cylindrical container.

2. A stirring-type mixer according to claim 1, wherein said mixer comprises

a cylindrical container provided with a first inlet at one end and an outlet at the other;

a set of stationary stirring blades arranged on the inside of said cylindrical container in a plurality of peripheral rows projecting substantially radially inward;

a rotor housed in said cylindrical container and made to rotate on the same axis;

a set of dynamic stirring blades arranged on the outside of said rotor in a plurality of peripheral rows in alternating relationship with said rows of stationary stirring blades arranged on the inside of said cylindrical container, and

a second inlet for feeding a fluid material different from that fed through said first inlet, wherein a cooling means is provided inside said rotor and it is so arranged that the fluid materials in said cylindrical container are cooled by said cooling means.

3. A stirring-type mixer according to claims 1 or 2, wherein an outer shell is provided to surround said cylindrical container for a refrigerant to be led there through for cooling the fluid material together with said cooling means.

4. A stirring-type mixer according to any one of claims 1 to 3, wherein the cross-sectional area of the flow path formed by said cylindrical container with said rows of stationary stirring blades and said rotor with said rows of dynamic stirring blades is made to be narrower from the inlet toward the outlet progressively or stepwise.

5. A stirring-type mixer according to claim 4, wherein the cross-sectional area of said flow path is made smaller or larger progressively or stepwise by making said clearance between said cylindrical container with said rows of stationary stirring blades and said rotor with said rows of dynamic stirring blades.

6. A stirring-type mixer according to any one of claims 1 to 5, wherein said rotor and cylindrical container have portions increased in outer diameter and inner diameter, respectively.

FIG. 1

FIG. 2

FIG. 3

FIG. 4

FIG. 5

FIG. 6

FIG. 7

FIG. 8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-B-1 457 182 (WACKER) <br> * Column 3, line 64 - column 4, line 5; figure 1 * | 1-3 | B 29 B  7/40 |
| A | US-A-3 881 871 (PORTER) <br> * Figure * | 1-2 | |
| A | WO-A-8 602 860 (TATABANYAI) <br> * Figure * | 4-6 | |
| A | FR-A-2 310 376 (WACKER) <br> * Figure 2 * | 4-6 | |
| A | GB-A- 863 843 (IMPERIAL CHEMICAL) | | |
| A | FR-A- 956 934 (BATA) | | |
| A | US-A-4 067 553 (YAMAOKA) | | |

TECHNICAL FIELDS SEARCHED (Int. Cl.4)

B 01 F
B 29 B

The present search report has been drawn up for all claims

| Place of search | Date of completion of the search | Examiner |
|---|---|---|
| THE HAGUE | 09-05-1989 | PEETERS S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)